# EUROPÄISCHE PATENTSCHRIFT

(11) **EP 1 097 496 B1**
(45) Veröffentlichungstag und Bekanntmachung des Hinweises auf die Patenterteilung: **25.09.2002**
(21) Anmeldenummer: 99945849.0
(22) Anmeldetag: 01.07.1999
(51) Int. Cl.: H02G 15/013

(54) **DICHTUNGSKÖRPER FÜR KABELGARNITUREN**
SEALING ELEMENT FOR CABLE FITTINGS
CORPS D'ETANCHEITE POUR GARNITURES DE CABLES

(30) Priorität: 15.07.1998 DE 19831823
(43) Veröffentlichungstag der Anmeldung: 09.05.2001
(73) Patentinhaber: CCS Technology, Inc., Wilmington, DE 19803 (US)
(72) Erfinder: LAPP, Oliver, D-42287 Wuppertal (DE); ZIMMER, Rainer, D-58579 Schalksmühle (DE)
(74) Vertreter: Sturm, Christoph, Dipl.-Ing.
(86) Internationale Anmeldenummer: DE9901985
(87) Internationale Veröffentlichungsnummer: WO00004618

(56) Entgegenhaltungen:
- EP-A- 0 797 114
- WO-A-95/34929
- US-A- 3 935 373

## Beschreibung

Die Erfindung betrifft einen Dichtungskörper für Kabelgarnituren aus thermoplastischem Kunststoff mit Kabeleinführungsöffnungen in einer Trennungsebene des geteilten Dichtungskörpers und mit einer Kabelabfangvorrichtung, wobei Kabeleinführungen außerhalb des Trennebenenbereichs des Dichtungskörpers angeordnet sind, und wobei diese Kabeleinführungen mit bei Bedarf abtrennbaren Verschlüssen versehen sind.

Aus der US-A-3935373 ist ein derartiger Dichtungskörper bekannt.

Aus der EP 0 408 967 B1 ist ein Dichtungskörper für längsgeteilte Kabelgarnituren aus thermoplastischem Kunststoff bekannt, bei dem bei Bedarf Kabeleinführungsöffnungen in einer Trennungsebene eingeschnitten werden können. Der Dichtungskörper besteht aus hintereinanderliegenden Lamellen, wobei in den Zwischenräumen zwischen den Lamellen Druckplatten geführt werden, die von einwärts wirkenden Druckmitteln gegen den Kabelmantel des eingeführten Kabels gepreßt werden. Bei dieser Art einer Kabeläbfangvorrichtung wird das jeweilige Kabel bis zu einem zulässigen Grad eingeschnürt und dadurch in Längsrichtung fixiert. Dabei müssen jedoch die zwischen den Dichtungslamellen geführten Druckplatten den jeweiligen Kabeleinführungsöffnungen angepaßt werden. Wenn bei einer derartigen Dichtungskörperanordnung nachträglich Kabeleinführungen benötigt werden, muß das gesamte Dichtungssystem auseinandergenommen, zusätzliche Kabeleinführungsöffnungen eingeschnitten und schließlich die Dichtungen wieder erneuert werden.

Für vorliegende Erfindung stellt sich die Aufgabe, einen Dichtungskörper für Kabelgarnituren zu schaffen, bei dem es möglich ist, nachträglich Kabeleinführungen zu schaffen, die unabhängig sind von bereits eingebrachten Kabelabdichtungen, wobei dafür gesorgt werden muß, daß jedes nachträglich eingebrachte Kabel mit einer Kabelabfangvorrichtung abgefangen werden kann.

Die gestellte Aufgabe wird nun gemäß der Erfindung mit einem Dichtungskörper der eingangs geschilderten Art dadurch gelöst, daß die Kabeleinführungen an beiden Endseiten Innengewinde aufweisen, daß in jeder Kabeleinführung bei abgetrenntem Verschluß hintereinanderliegend eine Andruckhülse mit Außengewinde und einer nach einwärts gerichteten und mit Zahnprofilen versehenen Stirnfläche, eine beidseitig mit Zahnprofilen versehene Zahnscheibe, eine Dichtungshülse aus elastischem Material und eine Gegenlagerhülse mit Außengewinde angeordnet sind, und daß Führungsprofile an einer Stirnfläche des Dichtungskörpers für den. Einsatz von Kabelabfangvorrichtungen für jedes eingeführte Kabel angeordnet sind.

Die Vorteile an der erfindungsgemäßen Ausführung des vorliegenden Dichtungskörpers liegen besonders darin, daß in bereits bestückten Kabelgarnituren nachträglich Kabeleinführungen belegt werden können, ohne daß die bestehenden Kabeleinführungssysteme in der Trennebene beschädigt werden. Außerdem sind Kabelabfangvorrichtungen vorgesehen, die jeder Kabeleinführung zugeordnet sind und die in ihrer Lage dem Durchmesser des eingeführten Kabels angepaßt werden können. Durch entsprechende Verbindungen können die Kabelabfangvorrichtungen miteinander leitend verbunden werden, so dass Schirmungen zusammengefaßt werden können. Der Dichtungskörper ist geteilt und in der Trennebene sind für den Ersteinsatz, vor allem auch für die Einführung von ungeschnittenen Kabeln, Kabeleinführungsöffnungen in an sich bekannter Weise angeordnet. Die nachträglich bei Bedarf benötigten Kabeleinführungen sind hingegen zunächst mit einem Verschluß versehen. Diese Kabeleinführungen sind gemäß der Erfindung jeweils mit einem Preßdichtungssystem ausgerüstet, bei dem eine dem Durchmesser des Kabels grob angepaßte Dichtungshülse aus elastischem Material eingesetzt wird. Diese Dichtungshülse wird von beiden Seiten her durch eine Andruckhülse und eine Gegenlagerhülse in axialer Richtung verpreßt, wobei sich durch die Formänderung eine großflächige Abdichtung zwischen dem eingeführten Kabel und der Wandung der Kabeleinführung ergibt. Eine Besonderheit dieses erfindungsgemäßen Dichtungssystems liegt auch darin, daß durch Einlage einer Zahnscheibe zwischen der Andruckhülse und der Dichtungshülse eine Hemmung gegen unbeabsichtigtes Lösen der Andruckhülse erreicht ist. Dabei ist das System in der Art einer Ratsche so ausgelegt, daß das Eindrehen der Andruckhülse freigegeben, daß Ausdrehen jedoch gehemmt ist.

Die Kabelabfangvorrichtungen an den einzelnen Kabeleinführungen bestehen im Prinzip aus Befestigungsbögen, an denen die Kabel jeweils mit einem Spannband festgeklemmt werden. Diese Befestigungsbögen weisen Befestigungslaschen auf, die in Führungen am.Dichtungskörper gleitend eingesetzt werden. Diese Führungen sind als hinterschnittene Führungsnuten ausgebildet und befinden sich unmittelbar an den Kabeleinführungen. Die Befestigungslaschen werden nun in die Führungsnuten eingesetzt und können entsprechend des Kabeldurchmessers durch Verschieben senkrecht zur Einführungsrichtung ausgerichtet werden.

Dichtungskörper gemäß der Erfindung können in längsgeteilten wie auch in haubenförmigen Kabelgarnituren eingesetzt werden.

Die Erfindung wird nun anhand von acht Figuren näher erläutert.
- Figur 1: zeigt einen geteilten Dichtungskörper mit Ausführungen gemäß der Erfindung.
- Figur 2: zeigt eine Kabeleinführung für nachträglich einzusetzende Kabel im geschlossenen Zustand.
- Figur 3: zeigt den Einsatz der Einzelelemente in einer Kabeleinführung.
- Figur 4: zeigt die Abdichtung bei der Einführung des Kabels mit maximal möglichem Kabeldurchmesser.
- Figur 5: zeigt die Abdichtung bei der Einführung eines Kabels mit kleinem Kabeldurchmesser.
- Figur 6: zeigt den schematischen Aufbau einer Kabeleinführungsanordnung in perspektivischer Darstellung.
- Figur 7: zeigt den Einsatz einer Kabelabfangvorrichtung gemäß der Erfindung.
- Figur 8: zeigt die erfindungsgemäße Kabelabfangvorrichtung.

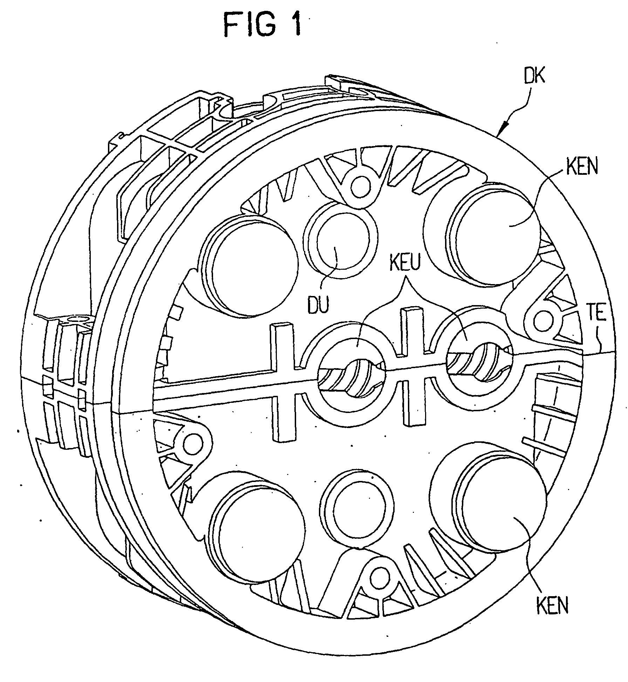

In Figur 1 ist der Dichtungskörper gezeigt, der gemäß der Erfindung mit Kabeleinführungen KEN versehen ist, die nicht in der Trennebene TE und insbesondere für die Einführung von Abzweigkabeln oder nachträglich einzuführenden Kabeln dienen. Da diese Kabeleinführungen KEN außerhalb der Trennebene TE liegen, können die ursprünglichen Kabeleinführungsöffnungen KEU bei der Nachrüstung unberührt bleiben. Die Kabeleinführungsöffnungen KEU eignen sich jedoch, da sie in der Trennebene liegen, auch für die Durchführung ungeschnittener Kabel. Hier werden auch die herkömmlichen Dichtungssysteme in Form von hintereinanderliegenden Lamellen des Dichtungskörpers mit eingelegtem Dichtungsband verwendet. Anders sind dagegen die Dichtungssysteme für die Abdichtung zwischen den Abzweigkabeln oder den nachträglich eingeführten Kabeln und den Wandungen der hierfür vorgesehenen Kabeleinführungen KEN. Hier wird eine Dichtungshülse (hier nicht sichtbar) verwendet, die axial so verpreßt wird, daß durch die Verformung des elastischen Materials eine großflächige Abdichtung erfolgt. In dieser Figur ist noch gezeigt, daß zusätzliche Durchführungen DU vorgesehen sind, die je nach Bedarf mit Ventilen, Erddurchführungen oder dergleichen bestückt werden, wobei sie zunächst verschlossen sind.

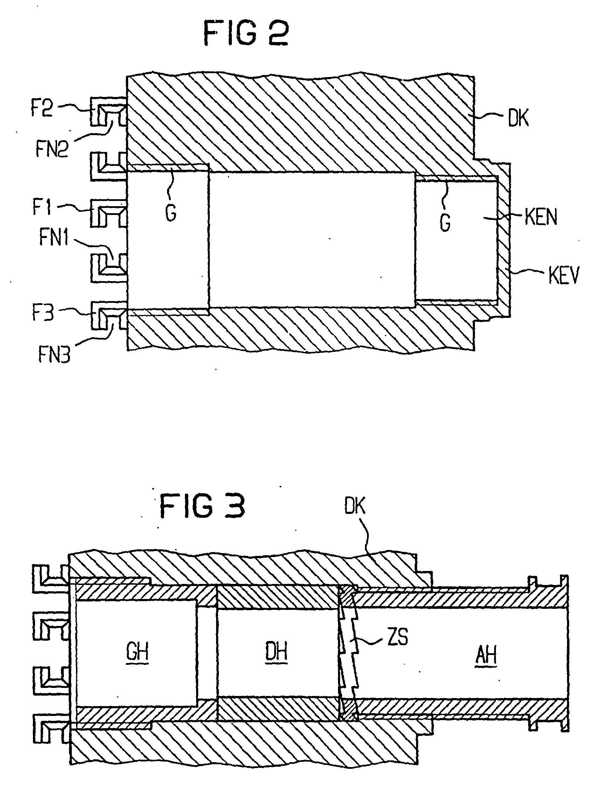

Figur 2 zeigt den Querschnitt einer Kabeleinführung KEN für die Einführung eines geschnittenen Kabels, vorzugsweise bei nachträglichem Bedarf. Daraus geht hervor, daß die Kabeleinführung KEN im unbenutzten Fall mit einem Verschluß KEV versehen ist, der bei Bedarf entfernt wird. Ein solcher Verschluß KEV kann als abtrennbare Wandung oder zum Beispiel auch als Stopfen ausgebildet sein. An den Randbereichen der Kabeleinführung KEN sind Innengewinde G vorgesehen, in die sich eine Andruckhülse und eine Gegenlagerhülse axial eindrehen lassen. Der Mittelbereich zwischen den beiden Innengewinden G ist für den Dichtungsbereich vorgesehen, in dem eine Dichtungshülse eingepreßt wird. Auf der inneren Stirnseite des Dichtungskörpers DK sind Führungen F1, F2, F3 zu erkennen, die Bestandteil von Kabelabfangvorrichtungen sind, die den einzelnen Kabeleinführungen KEN wie auch den ursprünglichen Kabeleinführungsöffnungen KEU zugeordnet sind. Diese Führungen F1, F2, F3 bilden paarweise hinterschnittene Führungsnuten FN1, FN2, FN3, in die nach der Einführung, Fixierung und Abdichtung der Kabel Befestigungslaschen der Kabelabfangvorrichtungen gleitend eingesetzt werden. Ein solcher gleitender Sitz der Kabelabfangvorrichtungen läßt die Einstellung auf verschiedene Kabeldurchmesser zu, wobei eine Bewegung in axialer Richtung nicht möglich ist. Damit wird die Abfangung von Druck- und Zugkräften erreicht. Die Abfangung von Torsionskräften ist ebenfalls gegeben, da die in die Führungsnuten eingesetzten Befestigungslaschen eine Drehung nicht zu lassen.

Figur 3 zeigt eine mit den einzelnen Dichtungselementen bestückte Kabeleinführung KEN. Dieses Dichtungssystem besteht in axialer Richtung hintereinanderliegend von außen nach innen aus einer Andruckhülse AH mit Außengewinde und einer zahnartig profilierten Stirnseite, die einer Zahnscheibe ZS zugewandt ist. Daran schließt sich eine Dichtungshülse DH aus elastischem Material an, wobei der Innendurchmesser dieser Dichtungshülse DH grob dem Durchmesser des einzuführenden Kabels entspricht. Den inneren Abschluß bildet eine Gegenlagerhülse GH, die als Gegenlager beim Anpressen der Di.chtungshülse DH durch die Andruckhülse AH dient. Aus dieser Figur geht auch hervor, daß die stirnseitig ausgebildete Zahnfläche der Andruckhülse AH formschlüssig mit der Profilierung der Zahnscheibe ZS zusammentrifft. Die. zweite nach einwärts zeigende Seite der Zahnscheibe ZS stützt sich auf die Stirnseite der Dichtungshülse DH und wird beim Andruck, der durch Eindrehen der Andruckhülse AH erzeugt wird, in das elastische Material der Dichtungshülse DH eingedrückt. Dadurch wird erreicht, daß aufgrund der scharfen Anstiegsseite der Zahnprofilierung ein Rückdrehen und damit eine ungewollte Lockerung des Anpreßdruckes nur sehr schwer möglich ist. Dazu kommt, daß die scharfen ineinandergreifenden Anstiegsseiten der Zahnscheibe ZS und der Stirnseite der Andruckhülse AH eine Rückdrehung nicht zulassen wie es bei der Art der Ausbildung einer Ratsche bekannt ist.

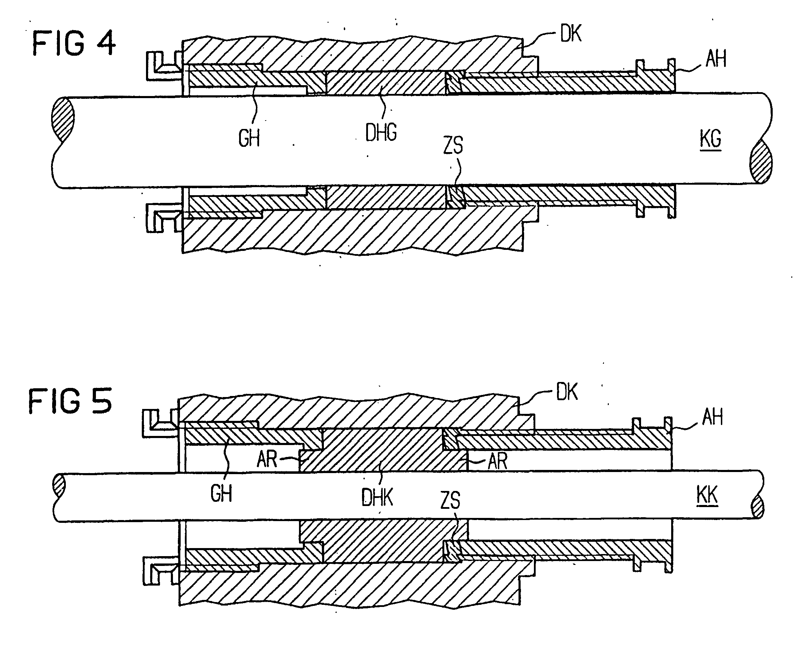

Figur 4 vermittelt die Abdichtungsverhältnisse in einer der vorher gezeigten Kabeleinführungen KEN bei Einführung eines Kabels KG mit großem, hier maximal möglichem Außendurchmesser. Es wird deutlich, daß sich das Kabel KG gerade noch in die Andruckhülse AH einschieben läßt. Entsprechend ist auch der Innendurchmesser der Dichtungshülse DHG gewählt, deren Wandungen beim Eindrehen der Andruckhülse AH gegen die Innenwandung der Kabeleinführung KEN und gegen den Kabelmantel des Kabels KG gepreßt werden. Dabei erstreckt sich die Abdichtung über die gesamte Länge der Dichtungshülse DHG entlang. Die Gegenlagerhülse GH dient als Gegenlager.

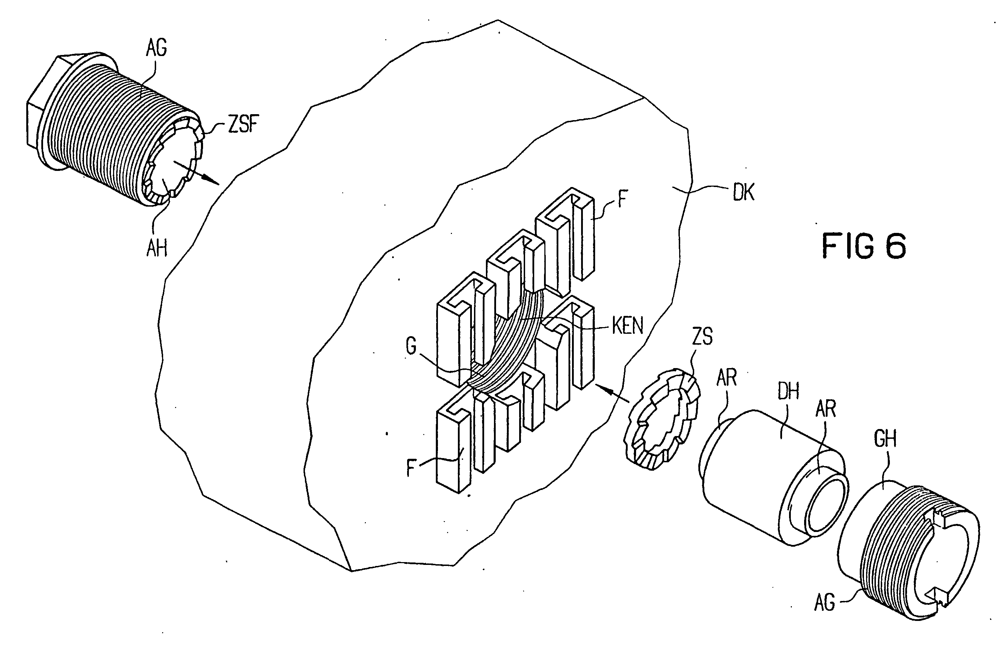

Figur 5 erläutert die Abdichtungsverhältnisse bei der Einführung eines Kabels KK mit kleinem Durchmesser, so daß das Kabel KK innerhalb der Andruckhülse AH und innerhalb der Gegenlagerhülse GH mit entsprechendem Freiraum verläuft. Die Dichtungshülse DH ist hingegen im Dichtungsbereich dem Außendurchmesser des Kabels KK grob angepaßt, so daß wiederum über den gesamten Bereich hinweg eine formschlüssige Flächenpressung erfolgen kann. An den Enden der Dichtungshülse DH sind hier Ansatzringe AR angeformt, die auf die Innendurchmesser der Andruckhülse AH und der Gegenlagerhülse GH abgestimmt sind. Dadurch wird eine axiale Ausformung der Dichtungshülse DH verhindert.

Figur 6 zeigt eine Kabeleinführung KEN im Dichtungskörper DK, die mit dem Dichtungssatz gemäß der Erfindung bestückt wird, wobei durch perspektivische Darstellung die Reihenfolge der Einzelteile und deren Formgebung besser hervorgeht. So wird die Andruckhülse AH mit ihrem Außengewinde AG von außen in das hier nicht sichtbare Innengewinde der Kabeleinführung KEN eingedreht, wobei die mit Zahnprofilen versehene Stirnfläche ZSF nach einwärts gerichtet ist. Diese Stirnfläche ZSF trifft auf die ebenfalls mit korrespondierenden Zahnprofilen versehene Zahnscheibe ZS, wodurch die bereits beschriebenen Sperr- bzw. Freigabewirkungen erzielt werden. Die zweite Stirnfläche der Zahnscheibe ZS ist gegen die Dichtungshülse DH gerichtet und bewirkt die hemmende Wirkung durch Eingriff in das elastische Material der Dichtungshülse. Die Dichtungshülse DH ist hier für Kabel mit kleinem Durchmesser vorgesehen; deshalb sind an den Stirnseiten Ansatzringe AR gestaltet. Schließlich folgt als Abschluß des Dichtungssystems die Gegenlagerhülse GH, die mit einem Außengewinde AG versehen ist und in die Kabeleinführung KEN eingedreht wird. Weiterhin sind Führungen F gezeigt, in welche eine Abfangvorrichtung gemäß der Erfindung eingesetzt werden kann.

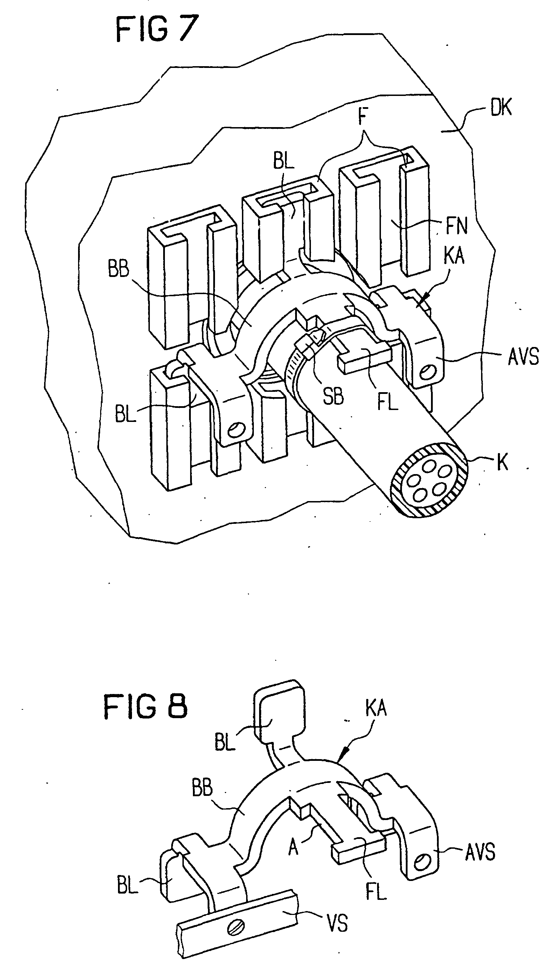

In Figur 7 ist der Einsatz einer Kabelabfangvorrichtung KA gemäß der Erfindung dargestellt. Sie besteht aus einem etwa halbkreisförmig gebogenen Befestigungsbogen BB, mit dem auch das stärkste Kabel überbrückt werden kann. An diesem Befestigungsbogen BB sind Befestigungslaschen BL angeformt, mit denen die Kabelabfangvorrichtung KA in hinterschnittene Führungsnuten FN der Führungsprofile F am Dichtungskörper DK eingehängt wird. Innerhalb der Führungsnuten FN kann die Kabelabfangvorrichtung senkrecht zur Einführungsrichtung verschoben werden, so daβ auf diese Weise eine Anpassung an den Durchmesser des eingeführten Kabels K erfolgen kann. Das Kabel K wird an einer Fixierlasche FL des Befestigungsbogens BB mit Hilfe eines Spannbandes SB fixiert. Die Fixierlasche FL ist mit einer Aussparung A versehen, in der das Spannband SB geführt ist. Auf diese Weise ist eine Fixierung in Längsrichtung ausreichend gegeben. Weiterhin ist der Befestigungsbogen BB mit Ansätzen AVS für Verbindungsschienen oder Verbindungsleitungen versehen, über die eine elektrisch leitende Verbindung aller Kabelabfangvorrichtungen KA hergestellt werden kann.

In Figur 8 ist eine Kabelabfangvorrichtung KA gemäß der Erfindung dargestellt, bestehend aus dem Befestigungsbogen BB und den abgewinkelten Befestigungslaschen BL, hier zum Beispiel drei Befestigungslaschen BL. An diesen Befestigungslaschen BL sind Ansätze AVS für Verbindungsschienen VS oder Verbindungsleitungen angeformt. Die Fixierlasche FL weist für den Einsatz eines Spannbandes eine Aussparung A auf, wodurch ein Längsverrutschen verhindert wird.

## Patentansprüche

1. Dichtungskörper für Kabelgarnituren aus thermoplastischem Kunststoff mit Kabeleinführungsöffnungen (KEU) in einer Trennungsebene (TE) des geteilten Dichtungskörpers und mit einer Kabelabfangvorrichtung, wobei Kabeleinführungen (KEN) außerhalb des Trennebenenbereiches (TE) des Dichtungskörpers (DK) angeordnet sind, und wobei diese Kabeleinführungen (KEN) mit bei Bedarf abtrennbaren Verschlüssen (KEV) versehen sind, **dadurch gekennzeichnet, daß** die Kabeleinführungen (KEN) an beiden Endseiten Innengewinde (G) aufweisen, daß in jeder Kabeleinführung (KEN) bei abgetrenntem Verschluß (KEV) hintereinanderliegend eine Andruckhülse (AH) mit Außengewinde (AG) und mit einer nach einwärts gerichteten und mit Zahnprofilen versehenen Stirnfläche (ZSF), eine beidseitig mit Zahnprofilen versehene Zahnscheibe (ZS), eine Dichtungshülse (DH) aus elastischem Material und eine Gegenlagerhülse (GH) mit Außengewinde (AG) angeordnet sind und daß Führungsprofile (F) an einer Stirnfläche des Dichtungskörpers (DK) für den Einsatz von Kabelabfangvorrichtungen (KA) für jedes eingeführte Kabel (K) angeordnet sind.

2. Dichtungskörper nach Anspruch 1, **dadurch gekennzeichnet, daß** die mit Zahnprofilen versehene Stirnfläche (ZSF) der Andruckhülse (AH) und das Zahnprofil der Zahnscheibe (ZS) korrespondierend so wirken, daß die Eindrehrichtung der Andruckhülse (AH) freigegeben und die Ausdrehrichtung der Andruckhülse (AH) in der Wirkung einer Ratsche gesperrt ist.

3. Dichtungskörper nach einem der vorhergehenden Ansprüche,
**dadurch gekennzeichnet, daß** die Dichtungshülse (DH) dem Kabeldurchmesser in der Montagephase grob angepaßt ist.

4. Dichtungskörper nach einem der vorhergehenden Ansprüche,
**dadurch gekennzeichnet,**
**daß** die Führungsprofile (F) im Bereich jeder Kabeleinführung (KEN) und Kabeleinführungsöffnung (KEU) hinterschnittene Führungsnuten (FN) zur Aufnahme von Befestigungslaschen (BL) der Kabelabfangvorrichtung (KA) bilden.

5. Dichtungskörper nach einem der vorhergehenden Ansprüche,
**dadurch gekennzeichnet,**
**daß** die Kabelabfangvorrichtung (KA) einen halbkreisförmigen Befestigungsbogen (BB) aufweist, daß eine sich in Kabeleinführungsrichtung erstreckende Fixierlasche (FL) am Befestigungsbogen (BB) angeordnet ist, daß Befestigungslaschen (BL) am Befestigungsbogen (BB) angeordnet sind, die in hinterschnittene Führungsnuten (FN) des Dichtungskörpers (DK) eingreifen, wo eine Verschiebung innerhalb der Führungsnuten (FN) zur Lageanpassung der Kabelabfangvorrichtung (KA) ermöglicht ist.

6. Dichtungskörper nach Anspruch 5,
**dadurch gekennzeichnet,**
**daß** die Fixierlasche (FL) eine Aussparung (A) zur Aufnahme eines Spannbandes (SB) aufweist.

7. Dichtungskörper nach einem der vorhergehenden Ansprüche,
**dadurch gekennzeichnet,**
**daß** Durchführungsöffnungen (DU) für Ventile oder elektrisch leitende Anschlußeinheiten in der Stirnseite des Dichtungskörpers (DK) angeordnet sind.

8. Dichtungskörper nach Anspruch 5,
**dadurch gekennzeichnet,**
**daß** Ansätze (AVS) für Verbindungsschienen (VS) oder Verbindungsleitungen an der Kabelabfangvorrichtung (KA) angeordnet sind.

9. Dichtungskörper nach einem der vorhergehenden Ansprüche,
**dadurch gekennzeichnet,**
**daß** er an der Stirnseite einer längsgeteilten Kabelgarnitur als Abschluß eingesetzt ist.

10. Dichtungskörper nach einem der Ansprüche 1 - 8,
**dadurch gekennzeichnet,**
**daß** er in die offene Seite einer haubenförmigen Kabelgarnitur als Abschluß eingesetzt ist.

## Claims

1. Sealing element for cable fittings made of thermoplastic material, comprising cable entry holes (KEU) in a separating plane (TE) of the divided sealing element and comprising a cable clamping device, with cable entries (KEN) arranged outside the region of the separating plane (TE) of the sealing element (DK), and with these cable entries (KEN) being provided with closures (KEV) which can be disconnected as and when required, **characterized in that** the cable entries (KEN) have an internal thread (G) on both end sides, **in that** arranged in each cable entry (KEN) when the closure (KEV) is disconnected, lying one behind other, are a press-on sleeve (AH) with an external thread (AG) and with an inwardly directed end face (ZSF) provided with tooth profiles, a toothed disc (ZS), provided with tooth profiles on both sides, a sealing sleeve (DH) made of elastic material and a stop-end sleeve (GH) with an external thread (AG), and **in that** guide profiles (F) are arranged on an end face of the sealing element (DK) for the use of cable clamping devices (KA) for each inserted cable (K).

2. Sealing element according to Claim 1, **characterized in that** the end face (ZSF), provided with tooth profiles, of the press-on sleeve (AH) and the tooth profile of the toothed disc (ZS) act in a corresponding manner in such a way that the screwing-in direction of the press-on sleeve (AH) is released and the unscrewing direction of the press-on sleeve (AH) is blocked in the manner of a ratchet.

3. Sealing element according to one of the preceding claims, **characterized in that** the sealing sleeve (DH) is approximately adapted to the cable diameter in the installation phase.

4. Sealing element according to one of the preceding claims, **characterized in that** the guide profiles (F) in the region of each cable entry (KEN) and cable entry hole (KEU) form undercut guide grooves (FN) for receiving fastening lugs (BL) of the cable clamping device (KA).

5. Sealing element according to one of the preceding claims, **characterized in that** the cable clamping device (KA) has a semicircular fastening clip (BB), **in that** a fixing lug (FL) extending in the direction of cable insertion is arranged on the fastening clip (BB) and **in that** fastening lugs (BL) which engage in undercut guide grooves (FN) of the sealing element (DK), where a displacement within the guide grooves (FN) permits the positional adaptation of the cable clamping device (KA), are arranged on the fastening clip (BB).

6. Sealing element according to Claim 5, **characterized in that** the fixing lug (FL) has a recess (A) for receiving a clamping strap (SB).

7. Sealing element according to one of the preceding claims, **characterized in that** lead-through holes (DU) for valves or electrically conducting connection units are arranged in the end face of the sealing element (DK).

8. Sealing element according to Claim 5, **characterized in that** attachments (AVS) for connecting rails (VS) or connecting lines are arranged on the cable clamping device (KA).

9. Sealing element according to one of the preceding claims, **characterized in that** it is used as a termination on the end face of a longitudinally divided cable fitting.

10. Sealing element according to one of Claims 1 - 8, **characterized in that** it is inserted as a termination into the open side of a cable fitting in the form of a shroud.

## Revendications

1. Corps d'étanchéité pour garnitures de câbles en matière synthétique thermoplastique, comportant des ouvertures d'entrée de câbles (KEU) dans un plan de séparation (TE) du corps d'étanchéité conformé en deux parties et un dispositif serre-câbles, des entrées de câbles (KEN) étant disposées en dehors de la zone du plan de séparation (TE) du corps d'étanchéité (DK) et étant pourvues de fermetures (KEV) séparables en cas de besoin, **caractérisé en ce que** les entrées de câbles (KEN) présentent un filet intérieur (G) à leurs deux extrémités, **en ce qu'**un manchon de pression (AH) comportant un filet extérieur (AG) et une face frontale (ZSF) dirigée vers l'intérieur pourvue d'un profil denté, un disque denté (ZS) pourvu d'un profil denté des deux côtés, un manchon d'étanchéité (DH) en matière élastique et un manchon de butée (GH) comportant un filet extérieur (AG) sont disposés les uns derrière les autres dans chacune des entrées de câbles (KEN) après séparation de la fermeture (KEV) et **en ce que** des profilés de guidage (F) destinés à recevoir des dispositifs serre-câbles (KA) pour chaque câble (K) inséré sont disposés sur une face frontale du corps d'étanchéité (DK).

2. Corps d'étanchéité selon la revendication 1, **caractérisé en ce que** la face frontale (ZSF) du manchon de pression (AH) pourvue d'un profil denté et le profil denté du disque denté (ZS) agissent l'un par rapport à l'autre, de telle sorte que le sens de vissage du manchon de pression (AH) soit autorisé et que le sens de dévissage du manchon de pression (AH) soit empêché à la manière d'un cliquet.

3. Corps d'étanchéité selon l'une quelconque des revendications précédentes, **caractérisé en ce que** durant la phase de montage, le manchon d'étanchéité (DH) est adapté en gros au diamètre du câble.

4. Corps d'étanchéité selon l'une quelconque des revendications précédentes, **caractérisé en ce que** les profilés de guidage (F) dans la zone de chaque entrée de câble (KEN) et ouverture d'entrée de câble (KEU) forment des rainures de guidage (FN) contre-dépouillées destinées à recevoir des pattes de fixation (BL) du dispositif serre-câbles (KA).

5. Corps d'étanchéité selon l'une quelconque des revendications précédentes, **caractérisé en ce que** le dispositif serre-câbles (KA) présente un arc de fixation (BB) semi-circulaire, **en ce qu'**une patte de fixation (FL) s'étendant dans le sens d'insertion du câble est disposée sur l'arc de fixation (BB) et **en ce que** des pattes de fixation (BL) sont disposées sur l'arc de fixation (BB), lesquelles pattes s'insèrent dans des rainures de guidage (FN) contre-dépouillées du corps d'étanchéité (DK), un déplacement étant possible au sein des rainures de guidage (FN) de manière à permettre un ajustement de la position du dispositif serre-câbles (KA).

6. Corps d'étanchéité selon la revendication 5, **caractérisé en ce que** la patte de fixation (FL) présente un évidement (A) destiné à recevoir un collier de serrage (SB).

7. Corps d'étanchéité selon l'une quelconque des revendications précédentes, **caractérisé en ce que** des ouvertures de passage (DU) pour des valves ou des unités de raccordement conductrices d'électricité sont disposées sur la face frontale du corps d'étanchéité (DK).

8. Corps d'étanchéité selon la revendication 5, **caractérisé en ce que** des appendices (AVS) pour des rails de raccordement (VS) ou des lignes de raccordement sont disposés sur le dispositif serre-câbles (KA).

9. Corps d'étanchéité selon l'une quelconque des revendications précédentes, **caractérisé en ce qu'**il est utilisé en tant que fermeture sur la face avant d'une garniture de câble divisée dans le sens de la longueur.

10. Corps d'étanchéité selon l'une quelconque des revendications 1-8, **caractérisé en ce qu'**il est utilisé en tant que fermeture dans la face ouverte d'une garniture de câble en forme de coiffe.
